# FASCICULE DE BREVET EUROPEEN

(11) **EP 2 590 530 B1**
(45) Date de publication et mention de la délivrance du brevet: **16.11.2016**
(21) Numéro de dépôt: 11743098.3
(22) Date de dépôt: 05.07.2011
(51) Int. Cl.: B62B 3/10, A45C 3/04, A45C 13/26, A45C 13/30

(54) **CHARIOT DE SUPERMARCHE AVEC SACS**
EINKAUFSWAGEN MIT TASCHE
SHOPPING TROLLEY WITH BAGS

(30) Priorité: 18.03.2011 FR 1152257; 18.01.2011 FR 1150376; 28.07.2010 FR 1056237; 28.07.2010 FR 1056235; 05.07.2010 FR 1055424
(43) Date de publication de la demande: 15.05.2013
(73) Titulaire: Carrefour, 92100 Boulogne Billancourt (FR)
(72) Inventeur: PICAUD, Philippe, F-92100 Boulogne Billancourt (FR); REBOURS, Christophe, F-Suresnes 92150 (FR)
(74) Mandataire: Novagraaf Technologies
(86) Numéro de dépôt international: PCT/FR2011/051599
(87) Numéro de publication internationale: WO 2012/004528

(56) Documents cités:
- EP-A1- 2 590 849
- EP-A2- 0 423 729
- WO-A1-2010/048672
- FR-A1- 2 614 009
- FR-A2- 2 578 216
- JP-A- H1 016 989
- JP-A- 2006 131 250
- US-A- 2 890 060
- US-A- 4 830 385
- US-A- 5 678 842
- US-A- 6 065 873
- US-A1- 2007 096 437
- US-A1- 2010 084 443

## Description

L'invention concerne un ensemble comprenant un chariot et des sacs à provision.

Dans le domaine, on connaît, un chariot comportant au moins un bras présentant une longueur fixe suivant une direction d'allongement et qui s'étend en avant de montants arrière s'élevant fixement depuis un cadre inférieur horizontal ou sensiblement horizontal monté sur roues et appartenant à une armature tubulaire fixe, le bras étant pourvu de supports qui sont disposés en plusieurs endroits de sa longueur et qui coopèrent avec les moyens supports complémentaires prévus sur les sacs, pour les suspendre de façon amovible au bras.

Le document US 5 678 842 décrit un tel chariot. Le document JPH1016989 décrit un sac comportant des poignées de préhension et un cadre métallique à mémoire de forme situé à proximité de l'ouverture. Comme objectif, on vise :
de pouvoir charger aisément dans ce(s) sac(s), au fur et à mesure des rayons, les achats faits, puis, en sortie du supermarché, pouvoir laisser chaque chariot en le rangeant sans perte notable de place, tout en repartant aisément avec le(s) sac(s),
d'assurer une praticité de manoeuvre des sacs à suspendre, ou suspendus,
- d'éviter des manoeuvres délicates au client tant pour placer que retirer ses sacs.

Afin d'atteindre une partie au moins de ces buts, il est un ensemble selon la revendication 1.

Pour solliciter chaque sac suspendu vers un tel état fermé ou ouvert, on recommande (plutôt donc que de les prévoir par exemple sur le chariot) que lesdits moyens prévus pour cela soient portés par les sacs eux-mêmes, près de leur ouverture supérieure, et ceci qu'ils soient suspendus ou non. Ces moyens de sollicitation seront de préférence élastiques, pour agir de même. Il y aura ainsi une position naturelle : ouverte ou fermée. L'autre position (respectivement fermée et ouverte) sera atteinte en sollicitant ces moyens à l'encontre de leur effet naturel.

Ainsi, même posés, les sacs pourront être aisément utilisés (remplis ou vidés). Et la structure du chariot pourra être (plus) légère, puisqu'il ne portera pas lesdits moyens de sollicitation.

Pour allier légèreté structurelle du chariot/sécurité/solidité/facilité de manoeuvre (pas de nécessité d'avoir à soulever notablement les sacs pour les retirer du bras ni les y placer), on conseille que les supports et moyens supports coopèrent pour suspendre les sacs par crochetage à travers les oeillets
disposés quelques (2 à 10) cm en dessous de ladite ouverture supérieure de la paroi latérale de chaque sac.

Comme déjà indiqué, pour faciliter le rangement compact entre chariots, on conseille par ailleurs que le (chaque) chariot comprenne deux dits bras allant en se rapprochant vers l'avant et présentant :
- chacun longitudinalement lesdits supports des sacs, et,
- à l'arrière, entre eux, une ouverture.

Pour renforcer encore l'adéquation sacs-chariot en vue de faciliter l'utilisation des sacs tant pour les suspendre que pour les retirer, on recommande que le (s) bras du chariot :
- s'étend(ent) à l'horizontale ou avec un angle par rapport à l'horizontale inférieur à +/-25°, en avant desdits montants, lesquels se dressent depuis des bords latéraux du cadre inférieur (25),
- soi(en)t tenu(s) (de préférence uniquement) à l'arrière, par ces montants,
- soi(en)t, dans un plan horizontal et sur l'essentiel au moins de sa (leur) longueur, situé(s) plus près d'un axe longitudinal central que d'un plan vertical passant par l'un ou l'autre desdits bords latéraux du cadre.

On conseille aussi que les supports et les moyens supports complémentaires coopèrent pour suspendre latéralement en porte-à-faux les sacs au(x) bras.

Ainsi, les sacs seront accessibles sur trois de leurs quatre côtés, ceci étant encore plus intéressant avec une solution de suspension par crochetage.

A ce sujet, pour pouvoir suspendre un sac à deux supports de crochetage longitudinalement écartés le long d'un bras du chariot, de façon à aplatir ledit côté du sac le long du bras, lesdits supports et moyens supports complémentaires comprennent, sur la paroi latérale de chaque sac, un oeillet allongé ou deux oeillets disposés, sac suspendu, suivant ladite direction d'allongement, le long d'un côté du sac.

A nouveau pour une praticité d'utilisation, il est par ailleurs conseillé :
- qu'horizontalement et transversalement à la direction d'allongement, le bras présente une certaine largeur, ou les bras présentent entre eux une telle largeur, et au moins une lamelle-support est fixée de façon amovible à ce(s) bras sur cette largeur, cette lamelle-support présentant des éléments supports échelonnés pour, lorsqu'un sac n'est pas suspendu auxdits support, on puisse le suspendre à ces éléments support par des anses souples dont il est pourvu.
- et/ou que :
   * les supports et moyens supports coopèrent pour suspendre les sacs par crochetage de leur paroi latérale,
   * et/ou le bras est pourvu d'autres supports adaptés pour qu'y soient suspendus, le long de ce bras, et par au moins une de leurs poignées permettant de les porter à la main, d'autres sacs,
- et/ou que :
   * le chariot comprend, juste au-dessus dudit cadre inférieur de l'armature tubulaire, une plateforme de chargement, et,
   * verticalement :
      - lesdits sacs à suspendre présentent, remplis, chacun une même hauteur (h2),
      - et l'écartement vertical (h1) entre le(s) supports prévus sur le(des) bras et la plateforme est supérieur à la hauteur cumulée de deux dits sacs identiques, remplis et dressés donc chacun sur toute leur hauteur (h2),
- et/ou le sac présente une structure qui, sac posé au sol, lui permet de se maintenir de lui-même dressé et sensiblement ouvert.

Une fois encore pour faciliter les manoeuvres aux clients, on conseille encore que les supports soient disposés en plusieurs endroits de la longueur du(des) bras pour permettre d'y suspendre quatre dits sacs, soit deux par côté, disposés dos à dos par paire, chacun ayant une contenance comprise entre 0.015m³ et 0.035m³.

Pour faciliter le remplissage/vidage des sacs tout en évitant qu'une partie de son contenu puisse inopinément en tomber, on recommande que les moyens de sollicitation précités, de préférence liés à la paroi latérale du sac, comprennent des baguettes courbables. Ces baguettes sont de préférence disjointes à deux extrémités opposées de ladite paroi latérale où elles sont adjacentes, pour faciliter un aplatissement du sac, avec fermeture de son ouverture.

En compléments, on conseille :
- que les baguettes, flexibles, sont naturellement rectilignes, et/ou
- que la paroi latérale comprend deux panneaux réunis entre eux auxdites deux extrémités opposées de la paroi latérale par des liaisons souples, telles des coutures, s'élevant sur la hauteur des panneaux, pour l'aplatissement du sac par articulation de la paroi latérale le long des liaisons souples.

Pour élargir les possibilités d'utilisation du chariot, il est proposé que lesdits supports permettent la suspension d'autres dits sacs, ceci par au moins une de leurs poignées, et comprennent pour cela des blocs allongés le long du bras, à la manière de rebords.

Pour concilier enfin ce qui précède avec un rangement compact, par encastrement, de deux chariots identiques l'un dans l'autre, on préfèrera, en résumé, que le premier chariot soit pourvu d'une armature tubulaire dont une partie inférieure forme un cadre sensiblement horizontal:
- qui reçoit les roues, et,
- à partir de l'arrière de bords latéraux duquel se dressent fixement des montants, entre et en arrière desquels s'étend une poignée de manoeuvre du chariot, certains de ces montants:
- étant réunis transversalement à l'axe longitudinal pour définir au moins un arceau,
- tenant (directement ou indirectement) au moins un bras qui :
   * s'étend en avant desdits montants, à l'horizontale ou avec un angle par rapport à l'horizontale inférieur à +/-25°, en présentant une longueur suivant ledit axe longitudinal central,
   * dans un plan horizontal et sur l'essentiel au moins de sa longueur, est situé plus près de cet axe longitudinal central que d'un plan vertical passant par l'un ou l'autre desdits bords latéraux du cadre,
   * et présente longitudinalement des supports pour y suspendre des sacs à provisions, de façon amovible, le long et de part et d'autre de ce bras, et,
- définissant entre eux un espace transversal ouvert permettant, sacs non suspendus, d'y engager le(s) bras du second chariot, sous la poignée de manoeuvre, tandis que le cadre inférieur reçoit celui de ce second chariot.

Ci-après on va maintenant présenter plusieurs réalisations de chariots du type précité, à titre toutefois d'exemple uniquement, et en liaison avec des figures où :
Figure 1, on voit le chariot de 3/4 arrière,
Figures 2,3,4 on voit le chariot respectivement d'arrière, de côté et de dessus,
Figures 5,6, on voit le chariot en éclaté,
Figure 7, on voit le chariot en éclaté et notamment sans sa plateforme ni son arche d'habillage,
Figure 8, on voit le chariot chargé de quatre sacs sur son/ses bras supérieurs et d'autres sur sa plateforme inférieure, et
Figures 9,10,11,12 on voit une variante de réalisation du chariot avec, figure 10, le chariot chargeable par quatre sacs suspendus à son bras, deux par côté, et figure 11, un cinquième sac en place face à la poignée de manoeuvre du chariot,
Figure 13,14, on voit plusieurs chariots de la première réalisation et de la seconde, respectivement,
Figures 15,16,17,18, on voit la mise en place d'autres moyens supports utilisables pour la suspension des sacs non dédiés, comme figures 22 et 23 ou la figure 22 est la vue suivant la flèche XXII,
Figure 19 (dans ses différentes illustrations), on voit la mise en place d'un élément rapporté de suspension, sur un sac non dédié,
Figures 20,21, on voit deux réalisations de sacs dédiés au chariot.

Figuré, on voit donc un chariot de supermarché 1 engageable dans un autre chariot identique 10, pour un rangement compact.

Le chariot 1 présente un avant 1a (AVT), un arrière 1b (ARR) et un axe longitudinal 1c qui intersecte cet avant et cet arrière.

Le chariot 1 est pourvu d'une armature tubulaire fixe 5 dont une partie s'étend vers le haut, à l'endroit de montants fixes 15a, 15b.

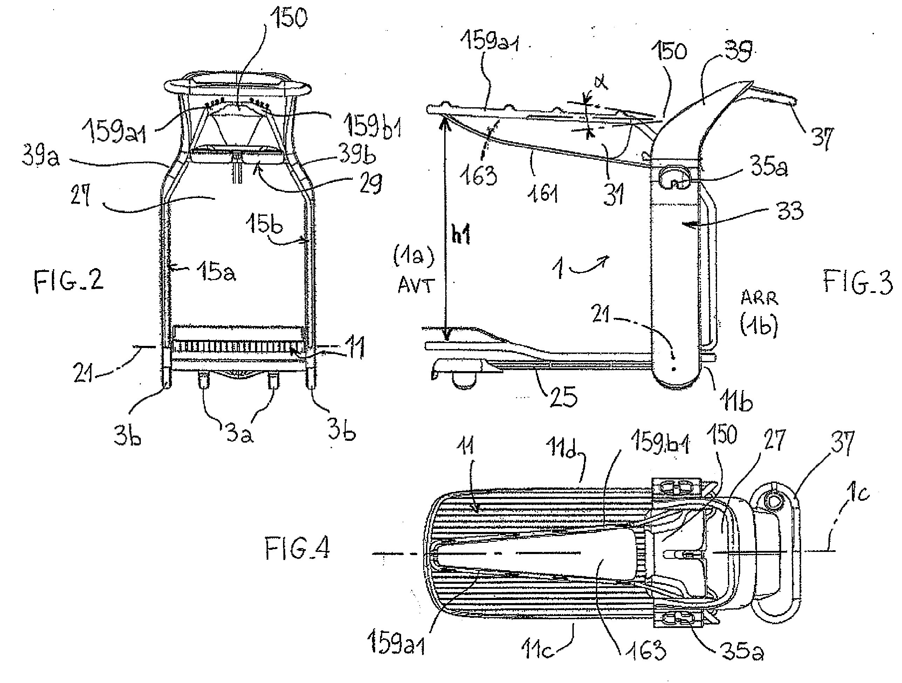

Il peut rouler grâce aux roues arrière 3b et avant 3a montées pivotantes autour d'axes horizontaux. Ces roues sont plus écartées à l'arrière qu'à l'avant (figure 2). Eventuellement, il pourrait n'y avoir qu'une roue avant. La(les) roue(s) sont liées à l'armature 5.

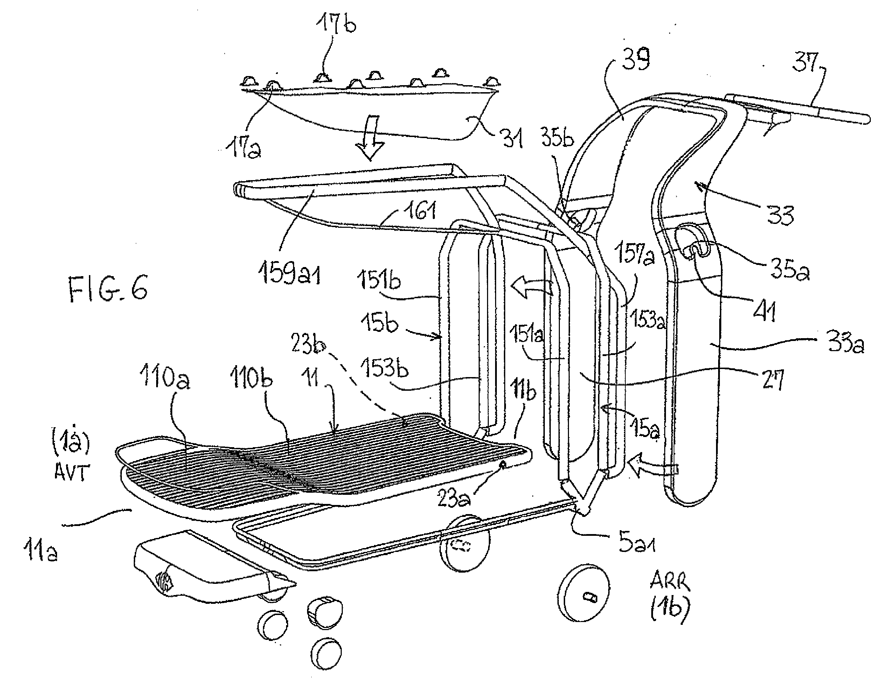

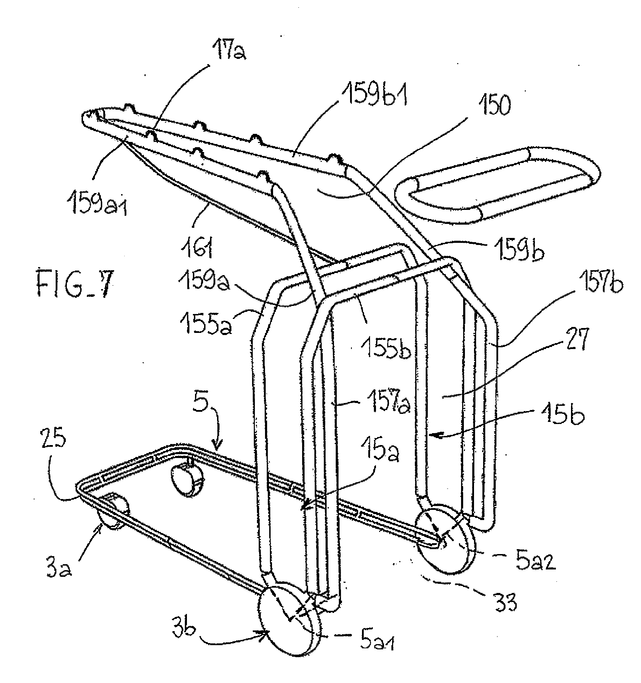

Comme on le voit sur les figures, les montants, repérés de façon générale 15a, 15b, se dressent fixement à partir de deux zones 5a1, 5a2 (figures 6, 7) situées latéralement près de l'arrière de bords latéraux 11c, 11d du cadre 25 et ici de la plateforme 11. Le chariot 1 est en effet favorablement pourvu d'une plateforme inférieure 11 de chargement.

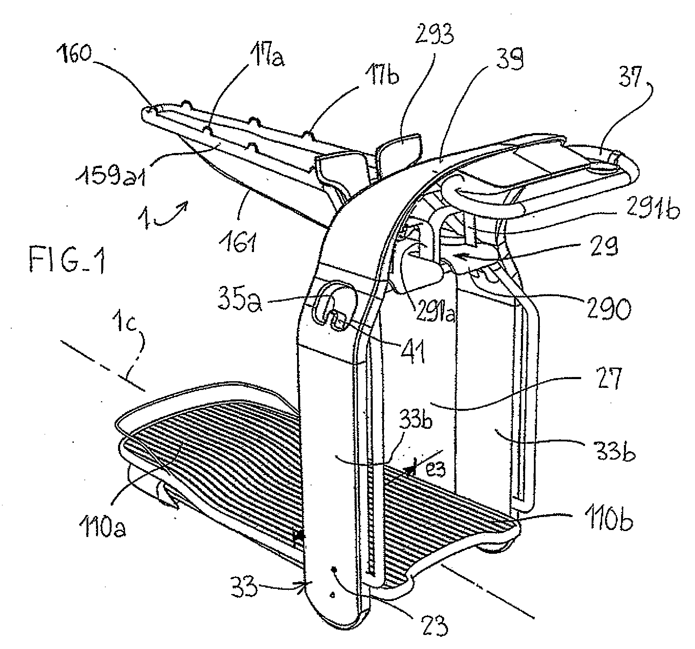

Dans la version préférée illustrée figures 1-8, certains de ces montants, repérés 151a, 151b, 153a, 153b, sont réunis transversalement à l'axe longitudinal 1c, pour définir un ou plusieurs arceaux dressés (sensiblement verticalement).

Ici, au-dessus du/des deux arceaux 155a, 155b s'élèvent encore d'autres dits montants, 159a, 159b, qui s'incurvent ensuite vers l'avant pour former des bras.

Deux bras allongés 159a1, 159b1 s'étendent à l'horizontale ou avec un angle d'écartement par rapport à l'horizontale inférieur à +/-25°.

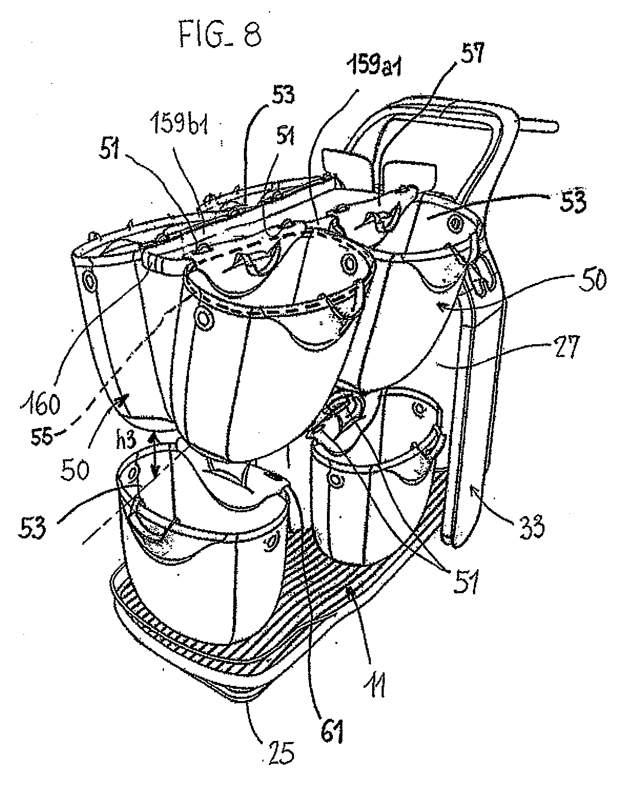

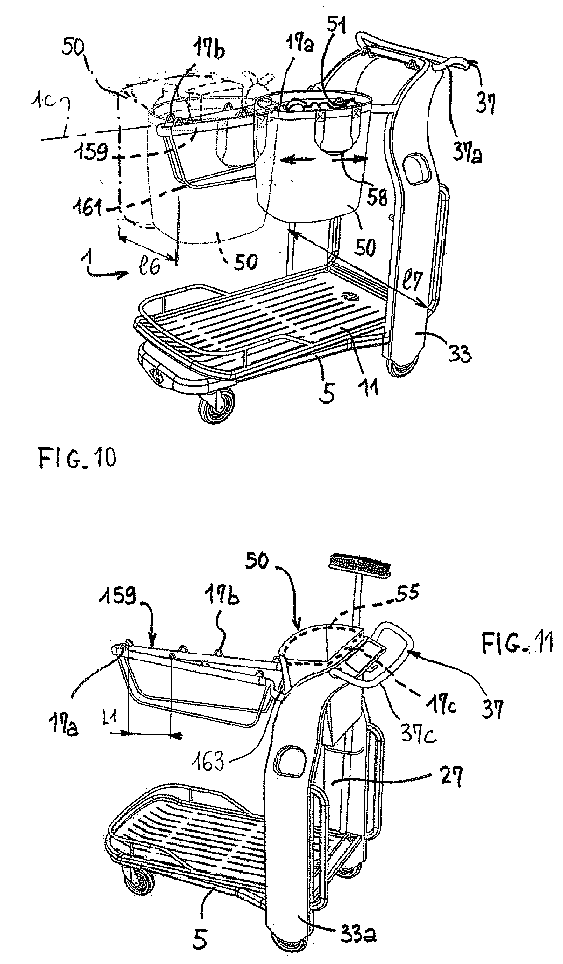

Ces bras 159a1, 159b1 présentent chacun, longitudinalement, des supports 17a, 17b....pour y suspendre des sacs 50 (figures 8, 11).

A l'arrière, il existe une ouverture 150 entre les bras 159a, 159b.

Dans la version ici illustrée, les deux bras sont réunis entre eux à l'avant, en 160, de manière qu'ils dessinent une forme en épingle allant en s'évasant vers l'arrière.

Pour un report d'effort, on recommande que lesdits bras 159a1, 159b1 soient raccordés rigidement à l'arceau précité 155a ou 155b.

Concernant le (s) bras 159, il est (sont), dans un plan horizontal et sur l'essentiel au moins de sa(leur) longueur, situé(s) le long de l'axe longitudinal central 1c ou plus près de lui que d'un plan vertical passant par l'un ou l'autre desdits bords latéraux du cadre 25.

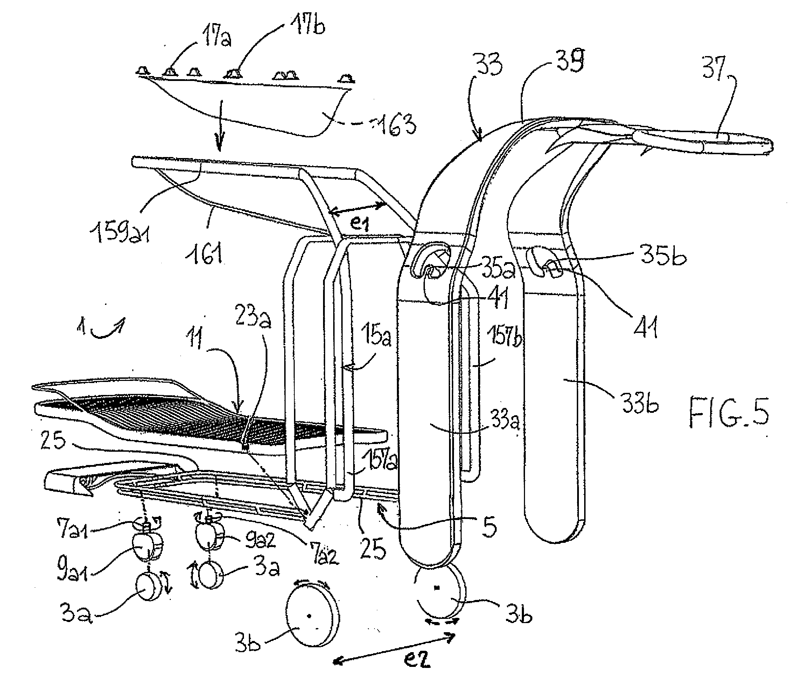

Quant à la plateforme 11, elle est :
- montée pivotante sur l'armature tubulaire 5 (par exemple les montants 15a, 15b), suivant un axe 21 perpendiculaire à la direction longitudinale 1c du chariot, par deux pivots arrière 23a, 23b situés vers lesdites zones latérales proches de l'arrière des bords latéraux de la plateforme (figures 5, 6),
- et/ou présente deux niveaux, respectivement arrière 110b et avant 110a, le niveau avant 110a étant surélevé par rapport au niveau arrière.

Si la solution à deux niveaux est retenue seule, on conseille que la longueur axiale (suivant 1c) de chaque niveau soit égal à environ 50% de la longueur totale de la plateforme 11, pour favoriser un engagement important.

Sous cette plateforme inférieure, on recommande que l'armature tubulaire 5 présente une partie 25 formant le cadre horizontal ou sensiblement horizontal précité auquel les roues, ici toutes les roues 3a, 3b, sont liées (attaches des arbres de pivotement 7a1, 7a2).

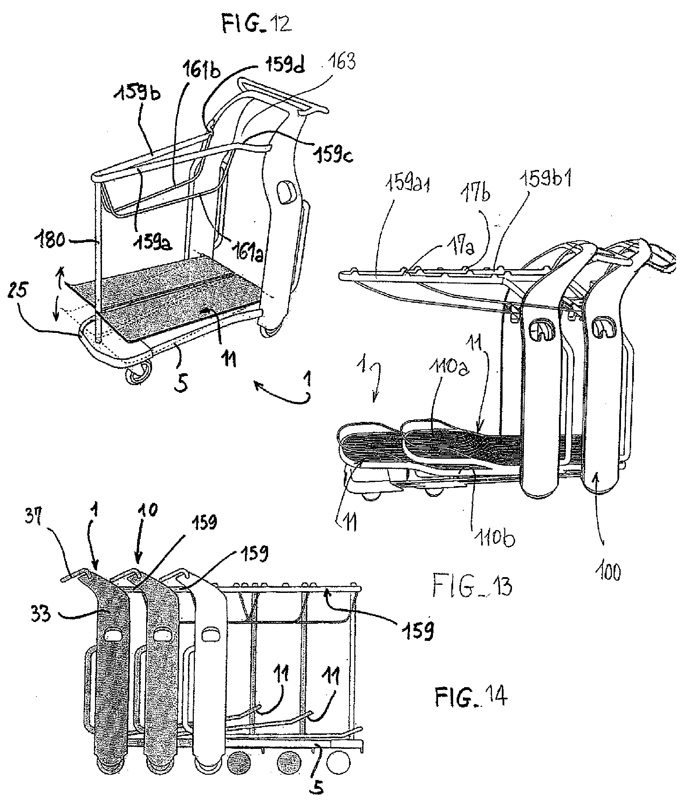

Pour favoriser l'emboîtement de rangement, les figures montrent que l'arceau (ici les deux arceaux) 155a, 155b, encadre(nt), perpendiculairement à l'axe 1c, un espace 27 totalement ouvert, pour offrir par là un libre passage depuis ou vers la plateforme inférieure de chargement 11, et/ou un libre engagement de ladite plateforme inférieure d'un chariot identique, depuis l'arrière, comme montré figure 13.

Comme illustré, cet espace ouvert 27 occupera favorablement tout l'espace au milieu du ou des arceau(x), tels 155a, 155b, et ce même au-delà, jusqu'au-dessus des bras support 159a1, 159b1.

Pour le guidage du chariot, une poignée 37 est portée en porte-à-faux par l'armature 5.

La poignée 37 s'étend transversalement à l'axe 1c, entre les montants précités (à l'arrière de ceux-ci), avec une barre 37c sensiblement horizontale (figures 1, 11 par exemple). Dans les réalisations préférées illustrées, la poignée 37 est située derrière les montants 15a, 15b..., tandis que le (s) bras 159... s'étendent uniquement à l'avant de ces montants, depuis ceux-ci.

Dans le cadre d'une recherche d'équilibre du chariot, y compris s'il est chargé en sacs suspendus à un des bras seulement (ou à côté seulement dudit bras, s'il est unique), ce(s) bras 159a1, 159a2 sera(ont) (con)centrés suivant l'axe longitudinal 1c et l'écartement e1 entre eux à l'endroit de l'ouverture arrière 150 sera de préférence inférieur à l'écartement e2 entre les roues arrière 3b (voir figure 5), ou à la dimension e3 (figure 1) que la plateforme 11 présente au droit de cette ouverture, perpendiculairement à ladite direction longitudinale 1c, de manière que le(les) sac(s) soi(en)t suspendu(s) au moins essentiellement au dessus de la plateforme (voir figures 8, 10).

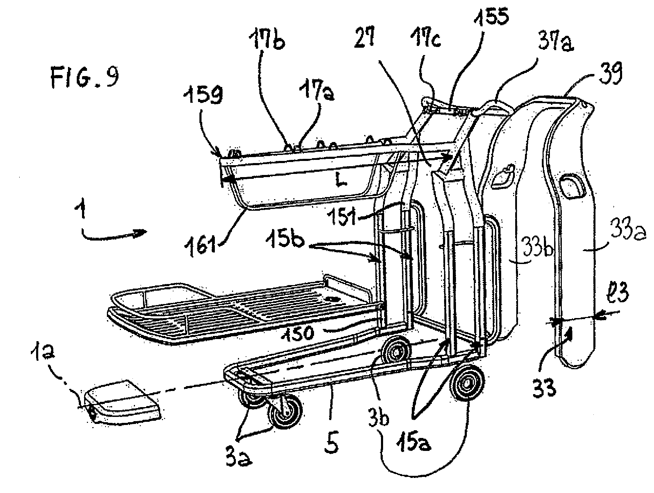

Dans la version qui vient d'être présentée du chariot, comme d'ailleurs dans celle des figures 9-11, le(s) bras, tels ici 159 ;159a1, 159b1, est(sont) tenu(s) uniquement à l'arrière, par les montants fixes 15a, 15b (par exemple par soudage), de sorte qu'ils s'étendent donc de là, vers l'avant, en porte-à-faux.

Pour apporter un renfort au bras, on prévoit figure 12 que le bras 159 sera favorablement lié, vers l'avant, à un étai 180 s'étendant vers le bas et fixé au châssis 5. Il ne sera ainsi plus en porte-à-faux ; cette version n'est pas celle préférée, car elle limite l'accès par l'avant à la plateforme 11.

A partir de ce qui précède et des figures, on aura noté que, de préférence, le(s) bras tels 159a, 159b sera(ont) fixe(s) vis-à-vis des montants tels 15a, une solution pivotante pour éviter leur glissement le long du(des) bras du chariot avant lors de l'encastrement d'un cadre 25 dans l'autre étant jugée a priori insuffisamment solide et peu pratique.

Sur différentes figures, on remarquera également que sera favorablement prévue une structure 33 en matière synthétique présentant deux flancs latéraux 33a, 33b se dressant autour des montants, ici 15a, 15b, 151a, 151b, jusqu'au dessus du niveau où s'étendent les bras 159, 159a1, 159b1; cf. figures 1, 9 notamment.

Pour les flancs, un plastique dur conviendra. Les flancs latéraux pourront enrober intérieurement et extérieurement le(s) arceau(x). Ils déborderont de préférence, devant et derrière lesdits montants, pour les habiller donc au moins extérieurement.

Dans la version des figures 9-12, pour limiter/bloquer par ailleurs un possible basculement/balancement des sacs, il est conseillé que, ici sous le niveau du bras 159 et portée par lui, s'étende au moins une butée, telle 161, (de préférence une double butée contre laquelle viendront porter les sacs suspendus avec positionnement transversal à l'axe 1c, dos à dos).

Comme illustré notamment figure 12 et pour un encastrement performant, le bras 159 comprend ici deux tronçons 159a, 159b convergents vers l'avant et qui présentent deux chicanes 159c, 159d, à un même endroit de leurs longueurs respectives. Ceci élargit vers l'arrière l'espace entre les tronçons pour créer entre eux, à proximité donc des montants arrière 15a, 15b, un espace central libre 163 de réception d'un sac (figure 11 notamment). Un ou deux supports 17c prévus sur la traverse 155 joignant les montants permettent de suspendre ce cinquième sac de dos, donc de la même manière que les autres, mais perpendiculairement à eux, face à l'avant du chariot ; voir figures 10, 11. Sacs absents, les bras du chariot arrière peuvent s'engager dans l'espace élargi 163, améliorant ainsi le guidage.

Figures 13, 14, on voit deux chariots identiques 1, 100 engagés ou encastrés horizontalement l'un dans l'autre, en position de rangement compact, ces chariots étant conformes respectivement aux versions des figures 1-8 et 9-12.

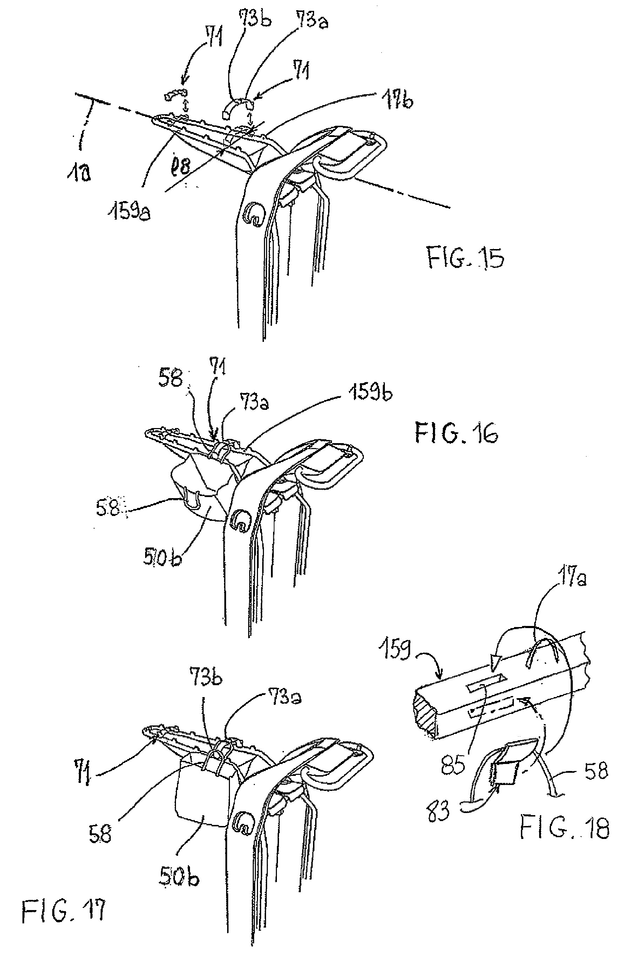

Figures 15-18, on voit que le bras 159, 159a, 159b pourrait être pourvu :
- de premiers supports, tels 17a, 17b, adaptés à coopérer avec les moyens supports complémentaires 51 prévus sur des premiers sacs dédiés, tels ceux-ci-avant 50, pour les suspendre au bras, latéralement, de part et d'autre, et de façon amovible,
- et de seconds supports, tels repérés 71 et/ou 83 (figures 15-17 et 19), et adaptés pour qu'y soient suspendus des seconds sacs 50b, par au moins une de leurs poignées 58 permettant de les porter à la main.

On conseille qu'au moins une série de ces seconds supports soient disposés le long du bras 159, pour permettre de suspendre une double ligne des ces seconds sacs 50b, de part et d'autre du bras.

Les petits sacs plastiques précités disponibles en magasin ou les propres sacs à provisions des clients (par exemple avec des poignées non en forme d'anses) pourront correspondre à ces seconds sacs.

Pour la praticité de la solution et réduire les coûts, on recommande que les seconds supports 71 ou 83 soient liés de façon amovible au bras. On conseille une suspension par crochetage. Comme illustré, on peut réaliser pour cela des fentes 85 dans le bras et y glisser partiellement des pattes plastiques en forme de crochets dirigés vers le haut (second support 83 figure 18). Une disposition dressée sur le dessus du bras comme montré en trait plein est possible, comme le serait une disposition basculée latéralement, sur le côté du bras, comme montré en traits mixtes, avec une forme en crochet redressée.

Pour notamment ne pas interférer avec la capacité d'encastrement, on conseille que les seconds supports soient disposés entre les premiers supports situés, ou répartis, le long du bras 17a, 17b. A ce sujet, ces seconds supports pourront être intercalés entre les premiers, comme figure 18. La solution des ponts 71 comme figures 15-17 est également utilisable, avec un bras à deux tronçons tronconiques 159a, 159b.

A cet endroit, une lamelle-support 71 est fixée de façon amovible, à ses extrémités, respectivement à l'un et l'autre des tronçons du bras, transversalement à la direction longitudinale 1c. Ici, cette fixation est l'écart des supports 17a, 17b et de l'espace vide entre les tronçons.

Chaque lamelle-support 71 peut venir se clipper le long du bras considéré. Elle est ici arrondie vers le haut, à la manière d'un pont. Ainsi, elle ne gêne pas lors de l'encastrement entre chariots.

Elle présente des éléments support 73a, 73b échelonnés pour des anses souples 58 dont est pourvu le sac 70, lequel est souple, sans tenue intrinsèque. Il peut être en tissu.

Les éléments support 73a, 73b peuvent être des ergots ou des encoches. Ainsi, sac ouvert (figure 16), seule une anse du sac sera engagée avec l'un des éléments support de suspension, l'autre anse n'étant engagée, de préférence avec un autre élément support de la même lamelle-support 71, que sac fermé (figure 17). Un bras 159 unique et relativement large (largeur 18 figure 15) aurait pu également convenir pour recevoir ces lamelles 71.

Ainsi, sac suspendu, on favorisera les deux positions : sac ouvert et sac fermé.

Pour favoriser l'emploi de sacs banals, on conseille que les seconds sacs 50b précités soient dépourvus desdits supports complémentaires 51 prévus sur les premiers sacs dédiés 50.

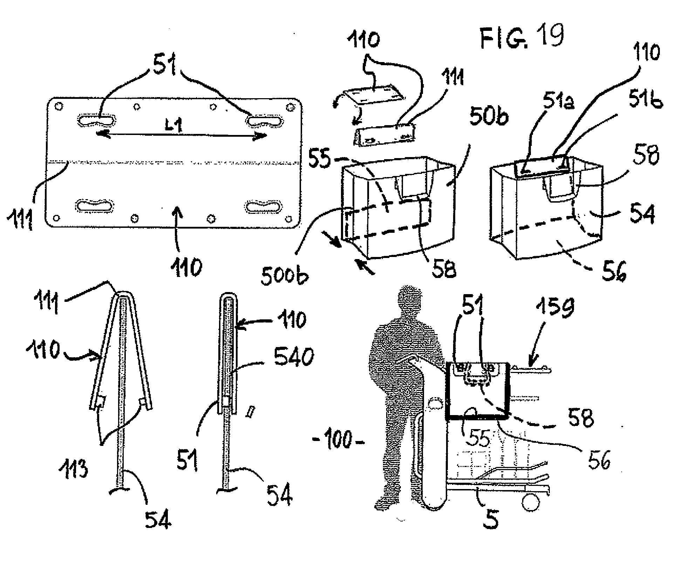

Pour apporter sous une autre forme une solution à cette problématique de comptabilité élargie vis-à-vis des sacs utilisables sur le chariot, il est encore proposé ce qui suit :
- le chariot comporte au moins ledit bras 159 s'étendant vers l'avant, en avant des montants arrière 15a, 15b qui se dressent latéralement depuis l'arrière d'un châssis inférieur 5 monté sur des roues avant et arrière 3a, 3b, ce bras étant pourvu de supports, tels 17a, 17b,
- et les sacs, tels 50b, a priori non dédiés, présentent chacun une paroi latérale 54, des poignées 58 pour les porter à la main, et un élément rapporté 110 adapté pour être fixé audit sac et qui est pourvu d'un moyen support, tel 51a et/ou 51b adapté à coopérer avec lesdits supports, tels 17a, 17b, du chariot pour suspendre les sacs au bras ; cf. figure 19.

Dans ce cadre, on recommande que l'élément rapporté 110 comprenne une pince qui prend la paroi 54 du sac en sandwich, comme illustré.

Il peut en particulier s'agir de deux plaques articulées à l'endroit d'une charnière 111 permettant par coincement de la paroi de s'y fixer. Des ergots 113 peuvent percer cette paroi pour sécuriser la fixation.

De préférence, les supports, tels 17a, 17b, du chariot et les moyens support, tels 51a, 51b, définiront alors, ensemble et de préférence, des moyens pour suspendre les sacs 50b par crochetage.

Ces sacs seront favorablement à paroi 54 suffisamment flexible pour être pliables sur eux-mêmes, vides.

Pour faciliter la préparation des sacs 50, 50b... destinés à être suspendus au chariot, le/chaque moyen support, tel 51a et/ou 51b, comprend au moins oeillet, et les supports (tels 17a...) du bras 159... des crochets.

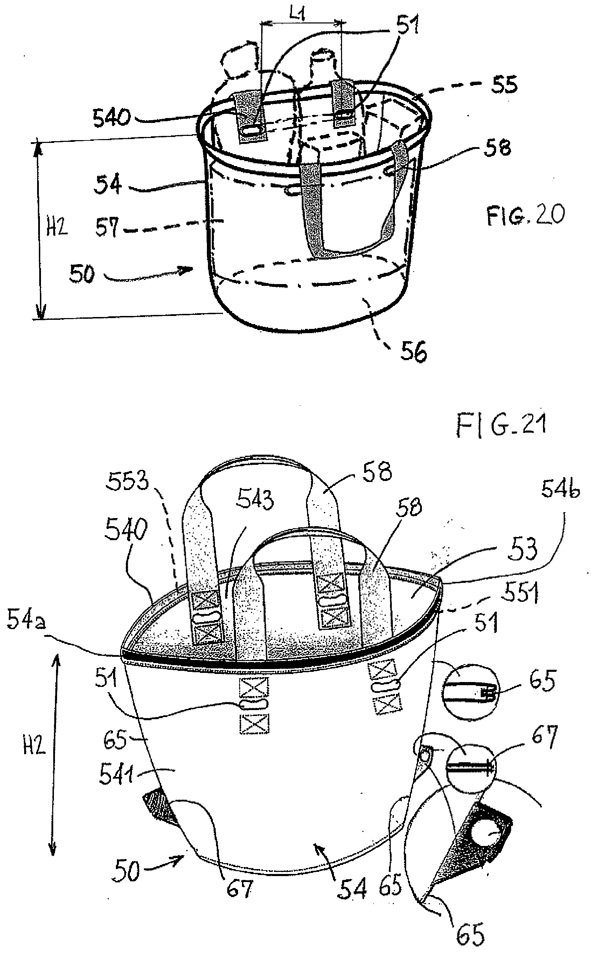

Comme illustré notamment figures 20, 21, on recommande que lesdits supports et moyens supports coopèrent de fait pour suspendre les sacs par crochetage à travers des oeillets 51 disposés quelques (2 à 10) cm en dessous de l'ouverture supérieure 53 de la paroi latérale de chaque sac.

Comme illustré notamment figures 20, les oeillets 51 dans la paroi 54 pourront être remplacés par au moins une fente ou un oeillet horizontal unique.

Ceci n'empêchera pas que, selon l'invention, les supports 17a, 17b... et les moyens support complémentaires comprennent, sur la paroi latérale de chaque sac, un oeillet allongé ou deux oeillets disposés, sac suspendu, suivant la direction 1c d'allongement du bras considéré, le long d'un côté du sac, pour pouvoir le suspendre à deux supports de crochetage longitudinalement écartés le long de ce bras du chariot, de façon à aplatir ledit côté du sac le long du bras (voir flèches opposées figure 10 et distance L1 figures 11, 19, 20). Ceci favorisera une ouverture du sac, ainsi que son retrait et sa mise en place ainsi déployé.

A priori, si les moyens support sont disposés sur deux bords opposés du sac considéré (voir illustrations) seuls ceux d'un bord seront utilisés pour le suspendre.

Ainsi, les moyens support 51 complémentaires desdits supports 17a ou 17b, des bras du chariot permettent au sac d'être suspendu en pendant alors latéralement en porte-à-faux.

A l'exception de celui de la figure 14, les supports, tels 17a, 17b, du chariot et les moyens support, tels 51a, 51b, de chaque sac sont adaptés pour suspendre latéralement les sacs au bras, de part et d'autre dudit bras, dos à dos, et de telle sorte que ces sacs, une fois suspendus, puissent être retirés du bras :
- latéralement par rapport à celui-ci, où qu'ils soient situés le long du bras,
- et essentiellement suivant un mouvement transversal à la longueur (L) de ce bras.

Les mouvements de suspension/retrait vis-à-vis du bras se feront alors a priori sensiblement horizontalement. Il suffira de dépasser la hauteur du crochet (entre 0,3 et 2cm de préférence).

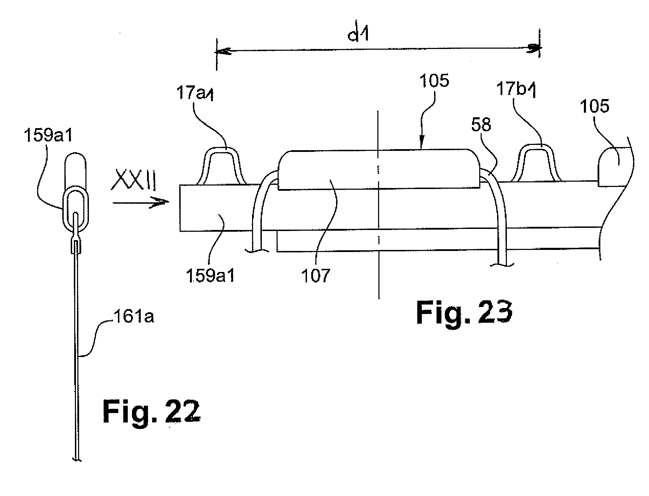

Figures 22, 23, on voit que le/chaque bras de suspension comprend, outre les moyens de suspension 17a, 17b, dédiés à des sacs adaptés (ici suspension par crochetage, via les moyens 51 du sac), des moyens additionnels de suspension 105 pour des sacs non dédiés.

De façon générale, lesdits moyens, ou moyens additionnels, de suspension comprennent des blocs allongés situés le long du (de chaque) bras de suspension à la manière de rebords (dressés) adaptés à retenir les poignées 58 d'un sac (les poignées passeront derrière).

Ici ces blocs allongés 107 fixés au bras concerné appartiennent aux moyens additionnels 105 de suspension.

Ils sont répartis sur la longueur du bras et peuvent être interposés entre deux crochets 17a, 17b, dans leur alignement pour ne gêner ni l'encastrement ni les suspension/retrait des sacs. Ces sacs continueront à pouvoir être ainsi suspendus, sur deux côtés, deux par côtés, côte à côte.

Ainsi, les poignées souples 58, sans tenue intrinsèque, d'un sac à provisions non dédié (sac du commerce) pourront être suspendues à ces moyens additionnels de suspension 105, ceci dans un état de ces poignées étendu le long du bras de suspension. De fait, cet état sera favorisé :
- par la forme, allongée le long de ce bras, desdits premiers moyens de suspension (17a, 17b : par exemple barre de crochetage) ou, comme illustré, des moyens additionnels 105,
- et/ou ou par un écartement le long du bras de deux éléments de suspension appartenant auxdits premiers moyens, ou moyens additionnels 105, de suspension.

Figure 23, on voit ainsi un écartement d1, le long du bras, entre deux éléments de suspension 17a1, 17b1 appartenant auxdits premiers moyens de suspension, avec d1 = L1.

Quant à la recherche de praticité déjà évoquée, si l'on considère un sac 50 suspendu à l'un au moins desdits supports des bras, on la favorisera avec un écartement en hauteur h1 (figure 3) entre les bras support 159a1, 159a2 et la plateforme inférieure 11, ainsi qu'une hauteur h2 des sacs (de leur paroi latérale), adaptés pour que, sacs remplis (donc pleinement déployés verticalement) pour certains suspendus auxdits bras support, pour d'autres posés sur la plateforme inférieure, comme figure 8, il demeure encore un espace vertical h3 pour accéder, par cet espace, à l'intérieur desdits sacs posés. Une hauteur h3 d'au moins 15cm, et de préférence entre 20cm et 40cm, est conseillée.

Un autre problème pris en compte concerne la capacité à rendre le sac facilement utilisable, notamment pour permettre de le porter aisément, sans avoir à le vider, après l'avoir rempli alors qu'il était suspendu au chariot à provisions et avoir ensuite laissé le chariot dans l'enceinte du supermarché.

Une solution est que le sac présente une contenance comprise entre 0.015m³ et 0.035m³, compromis pertinent entre la limite de poids pour l'utilisateur et un volume de chargement suffisant en super (hyper)marché, en particulier avec quatre ou cinq sacs suspendus au chariot et une capacité de chargement (pose) supplémentaire d'autres sacs ou bacs ou packs (eau, lessive...) sur la plateforme inférieure. Précisément, on conseille que les supports précités 17a, 17b, 71... soient disposés en plusieurs endroits de la longueur du(des) bras pour permettre d'y suspendre quatre dits sacs, soit deux par côté, disposés dos à dos par paire, chacun ayant donc une contenance comprise entre 0.015m³ et 0.035m³.

Comme montré figures 20, 19, les sacs 50, 50b peuvent, quand ils sont vides, être pliables sur eux-mêmes, de préférence sensiblement à plat, le premier verticalement, l'autre latéralement (présence pour cela par exemple d'un pli vertical favorisant une pliure en V de la paroi latérale 54 et du fond 56 du sac ; figure 15, ou d'une forme en accordéon de la doublure 57 figure 20).

Pour conjuguer résistance, stockage performant et coût de revient limité, les moyens supports 51 seront de préférence formés (de matière) avec les sacs, ou liés à eux, à l'endroit d'une ou plusieurs zones 540 mécaniquement renforcées de la structure souple n'empêchant pas les sacs vides d'être aplatis ; voir figures 19, 20 notamment.

Le sac comporte en outre des poignées 58, ici des anses, qui peuvent aussi être souples, lui permettant d'être porté à la main, dans un état non suspendu.

Près de l'ouverture supérieure 53 du sac permettant de le remplir et le vider, et de préférence autour d'elle, des moyens 55 de sollicitation vers un état ouvert sollicitent chaque sac vers cet état au moins lorsqu'il est ainsi suspendu.

Typiquement, il pourra s'agir d'un anneau élastiquement déformable. On conseille qu'il soit porté par le sac. Il pourra être naturellement de forme sensiblement en ellipse ou arrondie que l'on pourra aplatir, mais avec une mémoire de forme.

Ces moyens 55 de sollicitation pourront être logés dans un passage de la paroi latérale du sac.

Pour solliciter naturellement le sac vers l'état ouvert, il est en alternative proposé que la structure souple (paroi latérale) 54 de ce sac présente une doublure flexible 57, fermée sur elle-même, telle une forme tubulaire la rigidifiant ; voir figure 20.

Figure 21, les moyens élastiquement déformables de sollicitation comprennent des baguettes 551, 553 flexibles, courbables.

On conseille que ces baguettes soient disjointes à deux extrémités opposées 54a, 54b de la paroi latérale 54 où elles sont adjacentes. Ainsi, on pourra facilement mettre à plat le sac, avec fermeture de son ouverture 53 par rapprochement mutuel des baguettes.

On prévoit avantageusement :
- que les baguettes élastiques 551, 553 seront naturellement (globalement) rectilignes (favorable pour le rangement du sac), et/ou
- que la paroi latérale 54 comprendra deux panneaux 541, 543 réunis entre eux auxdites deux extrémités opposées 54a, 54b par des liaisons souples, telles les coutures 65, 67, s'élevant sur la hauteur des panneaux (et donc du sac), pour l'aplatissement du sac par articulation de la paroi latérale le long de ces liaisons souples.

Les baguettes élastiques 551, 553 pourraient avoir deux portions d'équilibre, l'une où elles sont courbées vers l'extérieur (pour ouvrir le sac), l'autre où elles sont globalement rectilignes pour le fermer.

Ce sac présente de préférence une structure qui, sac posé au sol, lui permet de se maintenir de lui-même dressé et sensiblement ouvert.

## Revendications

1. Ensemble comprenant un chariot et des sacs à provision, le chariot comportant au moins un bras (159) présentant une longueur fixe suivant une direction d'allongement (lc) et qui s'étend en avant de montants arrière s'élevant fixement depuis un cadre inférieur (25) horizontal ou sensiblement horizontal monté sur roues et appartenant à une armature tubulaire (5) fixe, le bras étant pourvu de supports (17a, 17b, 71) qui sont disposés en plusieurs endroits de sa longueur et qui coopèrent avec des moyens supports complémentaires (51, 58) prévus sur les sacs, pour les suspendre de façon amovible au bras, **caractérisé en ce que** les supports (17a, 17b...) et les moyens supports complémentaires (51, 58) coopèrent pour suspendre latéralement les sacs au bras, de part et d'autre dudit bras, dos à dos, et de telle sorte que ces sacs, une fois suspendus, puissent être retirés du bras latéralement par rapport à celui-ci, où qu'ils soient, essentiellement suivant un mouvement transversal à la longueur (L) de ce bras, et **en ce que** les supports (17a, 17b...) et les moyens supports complémentaires (51, 58) comprennent, sur la paroi latérale de chaque sac, un oeillet allongé ou deux oeillets disposés, sac suspendu, suivant ladite direction d'allongement, le long d'un côté du sac, pour pouvoir le suspendre à deux supports de crochetage longitudinalement écartés le long d'un bras du chariot, de façon à aplatir ledit côté du sac le long du bras, des moyens de sollicitation (55 ; 551, 553) étant prévus qui, près de l'ouverture supérieure (53) de la paroi latérale de chaque sac permettant de le remplir et le vider, agissent sur elle en la sollicitant vers un état ouvert ou fermé, sacs suspendus.

2. Ensemble selon la revendication 1, **caractérisé en ce que** lesdits moyens de sollicitation (55, 551, 553) sont portés par les sacs, près de leur ouverture supérieure (53), qu'ils soient suspendus ou non.

3. Ensemble selon la revendication 1 ou 2, **caractérisé en ce que** les supports et moyens supports coopèrent pour suspendre les sacs par crochetage à travers au moins des oeillets (51) disposés quelques, c'est-à-dire 2 à 10, cm en
dessous de ladite ouverture supérieure (53) de la paroi latérale de chaque sac.

4. Ensemble selon l'une au moins des revendications précédentes, **caractérisé en ce que** le chariot comprend deux dits bras (159al, 159bl) allant en se rapprochant vers l'avant et présentant :
- chacun longitudinalement lesdits supports (17a, 17b...) des sacs, et,
- à l'arrière, entre eux, une ouverture (150).

5. Ensemble selon l'une des revendications précédentes, **caractérisé en ce que** le (s) bras (159al, 159bl) :
- s'étend(ent) à l'horizontale ou avec un angle par rapport à l'horizontale inférieur à +/-25°, en avant desdits montants, lesquels se dressent depuis des bords latéraux du cadre inférieur (25),
- est (sont) tenu (s) à l'arrière, par ces montants (15a, 15b),
- est (sont), dans un plan horizontal et sur l'essentiel au moins de sa (leur) longueur, situé (s) plus près d'un axe longitudinal central (le) que d'un plan vertical passant par l'un ou l'autre desdits bords latéraux du cadre (25).

6. Ensemble selon l'une des revendications précédentes, **caractérisé en ce que** les supports (17a, 17b...) et les moyens supports complémentaires (51, 58) coopèrent pour suspendre latéralement en porte-à-faux les sacs au (x) bras.

7. Ensemble selon l'une des revendications précédentes,
**caractérisé en ce qu'**horizontalement et transversalement à la direction d'allongement, le bras présente une certaine largeur, ou les bras présentent entre eux une telle largeur, et au moins une lamelle-support (71) est fixée de façon amovible à ce (s) bras sur cette largeur, cette lamelle-support présentant des éléments support (73a, 73b) échelonnés pour, lorsqu'un sac n'est pas suspendu auxdits supports (17a, 17b...), on puisse le suspendre à ces éléments support par des anses souples dont il est pourvu.

8. Ensemble selon l'une au moins des revendications 1 à 7, **caractérisé en ce que** :
- les supports et moyens supports coopèrent pour suspendre les sacs par crochetage de leur paroi latérale,
- et/ou le bras est pourvu d'autres supports (71, 83) adaptés pour qu'y soient suspendus, le long de ce bras, et par au moins une de leurs poignées (58) permettant de les porter à la main, d'autres sacs (50b) .

9. Ensemble l'une des revendications précédentes, **caractérisé en ce que** :
- le chariot comprend, juste au-dessus dudit cadre inférieur (25) de l'armature tubulaire, une plateforme (11) de chargement, et,
- verticalement:
* lesdits sacs à suspendre présentent, remplis, chacun une même hauteur (h2),
* et l'écartement vertical (hl) entre le (s) supports (17a, 17b) prévus sur le (des) bras (159al, 159bl) et la plateforme (11) est supérieur à la hauteur cumulée de deux dits sacs identiques, remplis et dressés donc chacun sur toute leur hauteur (h2).

10. Ensemble selon l'une des revendications précédentes,
**caractérisé en ce que** le sac (50) présente une structure (33) qui, sac posé au sol, lui permet de se maintenir de lui-même dressé et sensiblement ouvert.

11. Ensemble selon l'une des revendications précédentes,
**caractérisé en ce que** les supports (17a, 17b, 71) sont disposés en plusieurs endroits de la longueur du (des) bras pour permettre d'y suspendre quatre dits sacs, soit deux par côté, disposés dos à dos par paire, chacun ayant une contenance comprise entre 0.015m³ et 0.035m³.

12. Ensemble selon la revendication 2, ou la revendication 2 et l'une des revendications 3 à 11, **caractérisé en ce que** les moyens de sollicitation (55) liés à la paroi latérale (54) du sac comprennent des baguettes (551, 553) courbables et disjointes à deux extrémités opposées (54a, 54b) de ladite paroi latérale où elles sont adjacentes, pour faciliter un aplatissement du sac, avec fermeture de son ouverture (53) .

13. Ensemble selon la revendication 12, **caractérisé en ce que** :
- les baguettes (551, 553), flexibles, sont naturellement rectilignes, et
- la paroi latérale (54) comprend deux panneaux (541, 543) réunis entre eux auxdites deux extrémités opposées (54a, 54b) de la paroi latérale par des liaisons souples, telles des coutures (65, 67), s'élevant sur la hauteur des panneaux, pour l'aplatissement du sac par articulation de la paroi latérale (54) le long des liaisons souples.

14. Ensemble selon la revendication 8, **caractérisé en ce que** lesdits supports (71, 83) permettant la suspension d'autres sacs (50b) par au moins une de leurs poignées (58) comprennent des blocs allongés (107) le long du bras (159), à la manière de rebords (99).

## Patentansprüche

1. Einheit, die einen Einkaufswagen und Einkaufstaschen umfasst, wobei der Einkaufswagen mindestens einen Arm (159) aufweist, der eine ortsfeste Länge in einer Ausdehnungsrichtung (1c) hat und sich vor hinteren Ständern erstreckt, die sich ortsfest von einem waagrechten oder im Wesentlichen waagrechten unteren Rahmen (25) erheben, der auf Räder montiert ist und zu einem ortsfesten röhrenförmigen Gestell (5) gehört, wobei der Arm mit Trägern (17a, 17b, 71) versehen ist, die an mehreren Stellen seiner Länge angeordnet sind und mit komplementären Trägereinrichtungen (51, 58) zusammenwirken, die auf den Taschen vorgesehen sind, um sie entfernbar am Arm aufzuhängen, **dadurch gekennzeichnet, dass** die Träger (17a, 17b, ...) und die komplementären Trägereinrichtungen (51, 58) zusammenwirken, um die Taschen seitlich am Arm zu beiden Seiten des Arms Rücken an Rücken und so aufzuhängen, dass diese Taschen, wenn sie aufgehängt sind, vom Arm seitlich in Bezug auf diesen entfernt werden können, wo sie auch sind, hauptsächlich gemäß einer Bewegung quer zur Länge (L) dieses Arms, und dass die Träger (17a, 17b, ...) und die komplementären Trägereinrichtungen (51, 58) auf der Seitenwand jeder Tasche eine längliche Öse oder zwei Ösen umfassen, die bei aufgehängter Tasche gemäß der Ausdehnungsrichtung entlang einer Seite der Tasche angeordnet sind, um sie an zwei Einhakträgern aufhängen zu können, die in Längsrichtung entlang eines Arms des Einkaufswagens auseinanderstehend sind, um die Seite der Tasche entlang des Arms abzuflachen, wobei Vorspanneinrichtungen (55; 551, 553) vorgesehen sind, die nahe der oberen Öffnung (53) der Seitenwand jeder Tasche, die es ermöglicht, sie zu füllen und zu leeren, auf sie einwirken, indem sie sie bei aufgehängten Taschen in einen offenen oder geschlossenen Zustand vorspannen.

2. Einheit nach Anspruch 1, **dadurch gekennzeichnet, dass** die Vorspanneinrichtungen (55, 551, 553) von den Taschen nahe ihrer oberen Öffnung (53) getragen werden, ob sie aufgehängt sind oder nicht.

3. Einheit nach Anspruch 1 oder 2, **dadurch gekennzeichnet, dass** die Träger und Trägereinrichtungen zusammenwirken, um die Taschen durch Einhaken durch mindestens Ösen (51) hindurch aufzuhängen, die einige, d.h. 2 bis 10, cm unter der oberen Öffnung (53) der Seitenwand jeder Tasche angeordnet sind.

4. Einheit nach mindestens einem der vorhergehenden Ansprüche, **dadurch gekennzeichnet, dass** der Einkaufswagen zwei Arme (159a1, 159b1) umfasst, die sich nach vorne hin annähern und haben:
- je in Längsrichtung die Träger (17a, 17b, ...) der Taschen, und
- hinten zwischen sich eine Öffnung (150).

5. Einheit nach einem der vorhergehenden Ansprüche, **dadurch gekennzeichnet, dass** der (die) Arm(e) (159a1, 159b1):
- sich waagrecht oder mit einem Winkel bezüglich der Waagrechten von weniger als +/-25° vor den Ständern erstreckt (erstrecken), die von den Seitenrändern des unteren Rahmens (25) aufragen,
- hinten von diesen Ständern (15a, 15b) gehalten wird (werden),
- sich in einer waagrechten Ebene und über mindestens den größten Teil seiner (ihrer) Länge näher einer zentralen Längsachse (1e) als einer senkrechten Ebene befindet (befinden), die durch den einen oder anderen der Seitenränder des Rahmens (25) verläuft.

6. Einheit nach einem der vorhergehenden Ansprüche, **dadurch gekennzeichnet, dass** die Träger (17a, 17b, ...) und die komplementären Trägereinrichtungen (51, 58) zusammenwirken, um die Taschen seitlich auskragend an dem (den) Arm(en) aufzuhängen.

7. Einheit nach einem der vorhergehenden Ansprüche, **dadurch gekennzeichnet, dass** der Arm waagrecht und quer zur Ausdehnungsrichtung eine bestimmte Breite hat oder die Arme zwischen sich eine solche Breite haben, und mindestens eine Trägerlamelle (71) entfernbar an diesem (diesen) Arm(en) über diese Breite befestigt ist, wobei diese Trägerlamelle gestufte Trägerelemente (73a, 73b) hat, um, wenn eine Tasche nicht an den Trägern (17a, 17b, ...) aufgehängt ist, sie an diesen Trägerelementen durch elastische Henkel aufgehängt werden kann, mit denen sie versehen ist.

8. Einheit nach mindestens einem der Ansprüche 1 bis 7, **dadurch gekennzeichnet, dass**:
- die Träger und Trägereinrichtungen zusammenwirken, um die Taschen durch Einhaken ihrer Seitenwand aufzuhängen,
- und/oder der Arm mit anderen Trägern (71, 83) versehen ist, die geeignet sind, damit daran entlang dieses Arms und durch mindestens einen ihrer Griffe (58), die es ermöglichen, sie in der Hand zu tragen, andere Taschen (50b) aufgehängt werden.

9. Einheit nach einem der vorhergehenden Ansprüche, **dadurch gekennzeichnet, dass**:
- der Einkaufswagen knapp über dem unteren Rahmen (25) des röhrenförmigen Gestells eine Beladeplattform (11) umfasst, und
- senkrecht:
* die aufzuhängenden Taschen gefüllt je die gleiche Höhe (h2) haben,
* und der senkrechte Abstand (h1) zwischen dem (den) Träger(n) (17a, 17b), die auf dem (den) Arm(en) (159a1, 159b1) vorgesehen sind, und der Plattform (11) größer ist als die kumulierte Höhe von zwei gleichen Taschen, gefüllt und folglich jede über ihre ganze Höhe (h2) aufgerichtet.

10. Einheit nach einem der vorhergehenden Ansprüche, **dadurch gekennzeichnet, dass** die Tasche (50) einen Aufbau (33) hat, der es ihr bei auf dem Boden abgestellter Tasche ermöglicht, sich selbst aufgerichtet und im Wesentlichen offen zu halten.

11. Einheit nach einem der vorhergehenden Ansprüche, **dadurch gekennzeichnet, dass** die Träger (17a, 17b, 71) an mehreren Stellen der Länge des Arms (der Arme) angeordnet sind, um es zu ermöglichen, daran vier Taschen aufzuhängen, d.h. zwei auf jeder Seite, die paarweise Rücken an Rücken angeordnet sind, wobei jede ein Fassungsvermögen zwischen 0,015m³ und 0,035m³ hat.

12. Einheit nach Anspruch 2 oder Anspruch 2 und einem der Ansprüche 3 bis 11, **dadurch gekennzeichnet, dass** die mit der Seitenwand (54) der Tasche verbundenen Vorspanneinrichtungen (55) krümmbare und getrennte Stäbe (551, 553) an zwei gegenüberliegenden Enden (54a, 54b) der Seitenwand umfassen, wo sie benachbart sind, um ein Abflachen der Tasche mit Schließen ihrer Öffnung (53) zu erleichtern.

13. Einheit nach Anspruch 12, **dadurch gekennzeichnet, dass**:
- die elastischen Stäbe (551, 553) natürlich geradlinig sind, und
- die Seitenwand (54) zwei an den zwei gegenüberliegenden Enden (54a, 54b) der Seitenwand durch weiche Verbindungen wie Nähte (65, 67) miteinander verbundene Bahnen (541, 543) umfasst, die sich über die Höhe der Bahnen erheben, für das Abflachen der Tasche durch Gelenkverbindung der Seitenwand (54) entlang der weichen Verbindungen.

14. Einheit nach Anspruch 8, **dadurch gekennzeichnet, dass** die Träger (71, 83), die das Aufhängen anderer Taschen (50b) durch mindestens einen ihrer Griffe (58) erlauben, längliche Blöcke (107) entlang des Arms (159) nach Art von Randleisten (99) umfassen.

## Claims

1. Assembly comprising a trolley and shopping bags, the trolley comprising at least one arm (159) which has a fixed length in an extension direction (1c) and which extends forwards from rear uprights fixedly raised from a horizontal or substantially horizontal bottom frame (25) mounted on wheels and forming part of a fixed tubular reinforcement (5), the arm being provided with supports (17a, 17b, 71) which are arranged at several points along its length and which cooperate with complementary support means (51, 58) provided on the bags, so that the latter are suspended removably from the arm, **characterized in that** the supports (17a, 17b...) and the complementary support means (51, 58) cooperate so that the bags are suspended laterally from the arm, on either side of the said arm, back to back, and in such a way that these bags, once suspended, may be removed from the arm laterally relative to the latter, wherever they are, essentially following a movement transverse to the length (L) of this arm, and **in that** the supports (17a, 17b...) and the complementary support means (51, 58) comprise, on the side wall of each bag, an elongated eyelet or two eyelets arranged, when the bag is suspended, in the said extension direction, along one side of the bag, so that it may be suspended from two hooking supports longitudinally spaced along an arm of the trolley, so as to flatten the said side of the bag along the arm, there being provided stressing means (55; 551, 553) which, close to the top opening (53) of the side wall of each bag allowing filling and emptying thereof, act on it biasing it into an open condition or closed condition, when the bags are suspended.

2. Assembly according to Claim 1, **characterized in that** the said stressing means (55, 551, 553) are mounted on the bags, close to their top opening (53), whether they be suspended or not.

3. Assembly according to Claim 1 or 2, **characterized in that** the supports and support means cooperate so that the bags are suspended by means of hooking through at least eyelets (51) arranged a few centimetres, i.e. 2 to 10 cm, below the said top opening (53) of the side wall of each bag.

4. Assembly according to at least one of the preceding claims, **characterized in that** the trolley comprises two said arms (159a1, 159b1) moving closer together in a forwards direction and having:
- each longitudinally the said supports (17a, 17b...) for the bags, and,
- at the rear, between them, an opening (150).

5. Assembly according to one of the preceding claims, **characterized in that** the arm(s) (159a1, 159b1) :
- extend(s) horizontally or at an angle of less than +/-25º relative to the horizontal, forwards from the said uprights which rise up from side edges of the bottom frame (25),
- is (are) retained at the rear by these uprights (15a, 15b),
- is (are), in a horizontal plane and over at least most of its (their) length, situated closer to a central longitudinal axis (1e) than a vertical plane passing through one or the other of said side edges of the frame (25).

6. Assembly according to one of the preceding claims, **characterized in that** the supports (17a, 17b...) and the complementary support means (51, 58) cooperate so that the bags are suspended laterally in an overhanging manner from the arm(s).

7. Assembly according to one of the preceding claims, **characterized in that**, horizontally and transversely with respect to the extension direction, the arm has a certain width, or the arms have between them such a width, and at least one support band (71) is fixed removably to this (these) arms over this width, said support band having staggered support elements (73a, 73b) so that, when a bag is not suspended from the said supports (17a, 17b...), it may be suspended from these support elements by means of flexible loop handles with which it is provided.

8. Assembly according to at least one of Claims 1 to 7, **characterized in that**:
- the supports and support means cooperate so that the bags are suspended by means of hooking of their side wall,
- and/or the arm is provided with other supports (71, 83) adapted so that other bags (50b) are suspended there, along this arm, and by means of at least one of their handles (58) allowing them to be carried by hand.

9. Assembly according to one of the preceding claims, **characterized in that**:
- the trolley comprises, just above the said bottom frame (25) of the tubular reinforcement, a loading platform (11), and,
- vertically:
* the said bags to be suspended each have, when filled, a same height (h2),
* and the vertical spacing (h1) between the support(s) (17a, 17b) provided on the arm(s) (159a1, 159b1) and the platform (11) is greater than the combined height of two said identical bags, filled and therefore each extended over their entire height (h2).

10. Assembly according to one of the preceding claims, **characterized in that** the bag (50) has a structure (33) which, when the bag is placed on the ground, allows it to remain by itself in an extended condition and substantially open.

11. Assembly according to one of the preceding claims, **characterized in that** the supports (17a, 17b, 71) are arranged at several points along the length of the arm(s) so as to allow four said bags to be suspended therefrom, namely two on each side, arranged back to back in pairs, each having a capacity of between 0.015m³ and 0.035m³.

12. Assembly according to Claim 2, or Claim 2 and one of Claims 3 to 11, **characterized in that** the stressing means (55) connected to the side wall (54) of the bag comprise rods (551, 553) which can be curved and are disconnected at two opposite ends (54a, 54b) of the said side wall where they are adjacent, so as to facilitate flattening of the bag, with closing of its opening (53).

13. Assembly according to Claim 12, **characterized in that**:
- the flexible rods (551, 553) are naturally rectilinear and
- the side wall (54) comprises two panels (541, 543) joined together at the said two opposite ends (54a, 54b) of the side wall by flexible connections, such as seams (65, 67), running along the height of the panels, for flattening the bag by means of hinging of the side wall (54) along the flexible connections.

14. Assembly according to Claim 8, **characterized in that** the said supports (71, 83), allowing the suspension of other bags (50b) by means of at least one of their handles (58), comprise elongated blocks (107) along the arm (159), in the manner of hems (99).
